# EUROPEAN PATENT APPLICATION

(11) **EP 0 726 224 A2**
(43) Date of publication of application: **14.08.1996**
(21) Application number: 95116576.0
(22) Date of filing: 20.10.1995
(51) Int. Cl.: B66F 9/18

(54) **Drum lifting and transporting device**

(30) Priority: 13.02.1995 US 387187
(71) Applicant: LIFTOMATIC MATERIAL HANDLING, INC., Evanston Illinois 60202 (US)
(72) Inventor: Berg, Bruce A., Lake Forest, Illinois 60045 (US)
(74) Representative: Goddar, Heinz J., Dr.

(57) **Abstract**

A drum lifting and transporting device is provided. The device has a rollable frame which stands in an upright position and has vertically moveable drum clamp. A pair of front legs extend generally forwardly and outwardly from the frame. The device positionable adjacent a pallet corner so that said pallet corner is received between said legs, enabling the drum clamp to lift or lower a drum from the pallet.

## Description

### BACKGROUND OF THE INVENTION

The present invention generally relates to the art of hand operated trucks for lifting and transporting drums. More specifically, the present invention relates to such trucks having a liftable clamp to raise and lower a drum.

Hand trucks are generally known. For example, two-wheeled hand trucks or dollies are commonly used for moving heavy objects. Such hand trucks can have a flat shelf slidable between an object and the ground. The truck is then tilted for lifting the object off of the ground.

Two-wheeled hand trucks specially configured for lifting standard drums are also known. For instance, U.S. Patent No. 4,741,659, incorporated herein by reference in its entirety, relates to a two-wheeled hand truck having a powered clamp that lifts a drum. This hand truck is tiltable for providing rolling transport on the two wheels.

Hand-moveable drum lifting trucks are also known having a stable, non-tilting bottom. For example, U.S. Patent Nos. 2,905,347, 2,635,775 and 2,360,858 as well as GB 2,069,454A relate to drum lifting trucks which ride on a stable base having three or more wheels and which vertically lift an upright drum.

Such non-tilting of drum lifting trucks are desirable to avoid spillage and ease transport of a drum. However, such devices require forwardly-extending wheeled legs which reach around a drum in order to bear the load of the drum without tipping over. In conventional devices, the front legs extend forwardly, receiving a drum fairly closely therebetween.

Unfortunately, certain lifting situations cannot be met by a drum lifter with such a conventional leg design. In particular, drums commonly must be loaded or removed from a pallet. Conventional forwardly-extending legs bump into the pallet, rendering it impossible to position the clamp to grip a drum resting on the pallet. It is desirable to provide a drum lifter that can be positioned for lifting a drum from a pallet.

Other drum carriers are known for use with a forklift or an overhead crane. For example, U.S. Patent Nos. 4,911,605 and 4,618,306 relate to such devices which are attachable to tines of a forklift. The power of the forklift is then used to provide lifting power and for transporting the drums. Unfortunately, forklifts are expensive to operate and cannot be used in a confined workspace.

The device disclosed U.S. Patent No. 2,905,347 has an automatically actuated hydraulic cylinder controlled by a hand switch for lifting the drum. Such an arrangement requires that the truck have an independent power source for driving a hydraulic pump. Such equipment is undesirable due because it is heavy, takes space and requires maintenance.

### SUMMARY OF THE INVENTION

The present invention provides an improved drum lifting and transporting device which overcomes the shortcomings of the prior art. Specifically, the present invention provides a drum lifting and transporting device which is hand positionable adjacent a pallet corner for lifting drums therefrom, and has a drum clamp lifting mechanism which is actuatable by an operator's foot.

To this end, a drum lifting and transporting device is provided having a rolling frame configured to prevent tipping of the apparatus. The frame includes a pair of front legs which extend generally forwardly so that the frame is rollably positionable to receive a drum on a pallet corner generally between the legs. A drum clamp is mounted to a forward side of the frame in a vertically slidable manner. An actuator is operably connected to the drum clamp to vertically move the drum clamp relative to the frame.

In an embodiment, the drum lifting and transporting device includes a handle disposed on a rearward side of the frame. The handle is grippable by an operator to roll the device on the ground.

In an embodiment, the actuator includes a fluid cylinder. A rod is movably driven by the fluid cylinder and is operably connected to the drum clamp. A fluid pump provides fluid pressure to the cylinder. A foot pedal is operable to drive the fluid pump. In a related embodiment, the actuator also includes a chain having a first end secured to the frame and a second end secured to the drum clamp. An idler sprocket rotatably is mounted to the rod. The chain runs over a top of the sprocket so that motion of the sprocket results in vertical motion of the drum clamp.

In an embodiment, the drum clamp includes a pivotal upper jaw engageable over a top of a drum chime ring and a pivotal lower jaw engageable with a bottom edge of the drum chime ring. The upper and lower jaws coact to grip the chime ring to lift the drum. In another embodiment, the drum clamp includes a lower brace member contactable against a side of the drum.

In an embodiment, The frame includes two parallel, vertically disposed track members. Each of the track members has a channel. The channels are arranged to face each other. A plurality of rollers are provided on the drum clamp which ride in the respective channels.

In an embodiment, the two front legs extend generally forwardly from the frame and are angled outwardly from each other by approximately 90° so that the device is positionable to receive a pallet corner generally between the front legs for lifting or lowering a drum on the pallet.

In an embodiment, a front wheel is rotatably mounted attached to each front leg, and at least one swivelling rear wheel is mounted rearwardly under the frame.

Therefore, an advantage of the present invention is to provide an improved drum lifting and transporting device which overcomes the deficiencies of the prior art.

Another advantage of the present invention is to provide a drum lifting and transporting device which is positionable adjacent a pallet for lifting a drum from the pallet or for lowering a drum onto the pallet.

A further advantage of the present invention is to provide a drum lifting and transporting device which includes a foot-powered actuator for lifting a drum.

An additional advantage of the present invention is to provide a stable device for transporting drums on a floor.

A still further advantage of the present invention is to provide a drum lifting and transporting device which is simple to operate.

Yet another advantage of the present invention is to provide a drum lifting and transporting device which is manually operable and does not require an independent power source.

An advantage of the present invention is to provide a drum lifting truck which is narrow enough to fit through most industrial doorways.

Additional features and advantages of the present invention are described in, and will become apparent from, the detailed description of the presently preferred embodiments and from the drawings.

### BRIEF DESCRIPTION OF THE DRAWINGS

Figure 1 is a front perspective view of a drum lifting truck of the present invention.

Figure 2 is a side elevation of the drum lifting truck of Figure 1 lifting a drum indicated in phantom lines.

Figure 3 is a side elevation of the drum lifting truck of Figure 1 positioned ready to clamp and lift a floor-resting drum indicated in phantom lines.

Figure 4 is a sectional view taken generally along line IV-IV of Figure 2.

### DETAILED DESCRIPTION OF THE PRESENTLY PREFERRED EMBODIMENTS

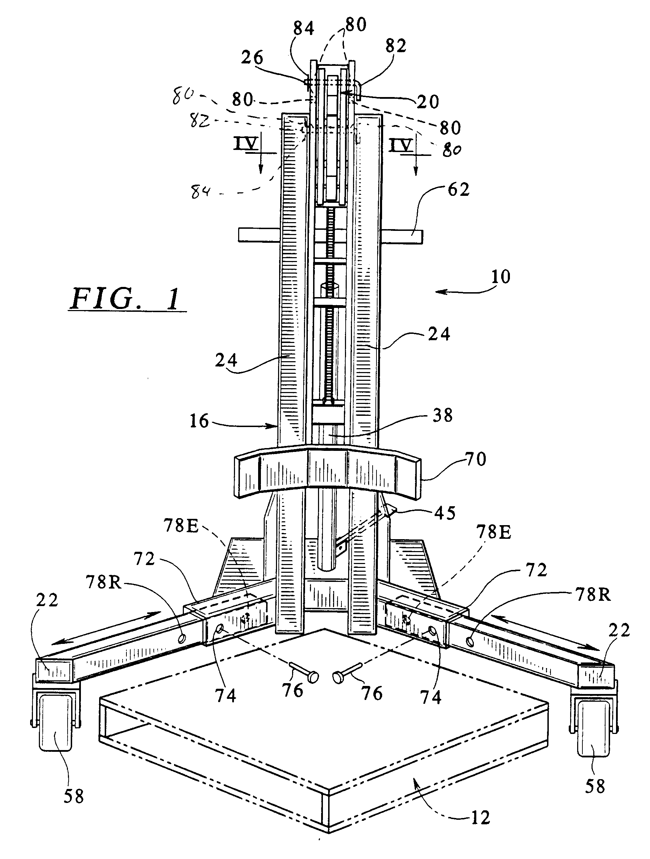

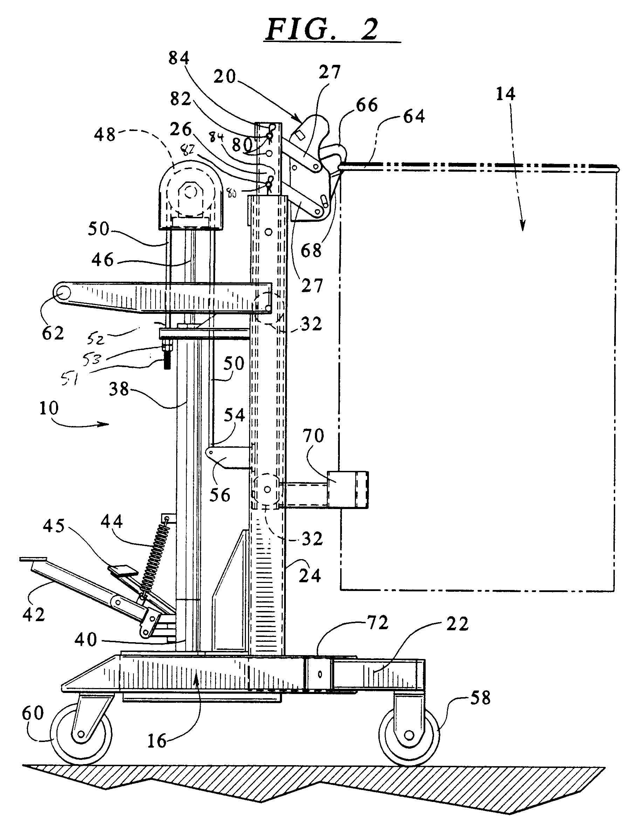

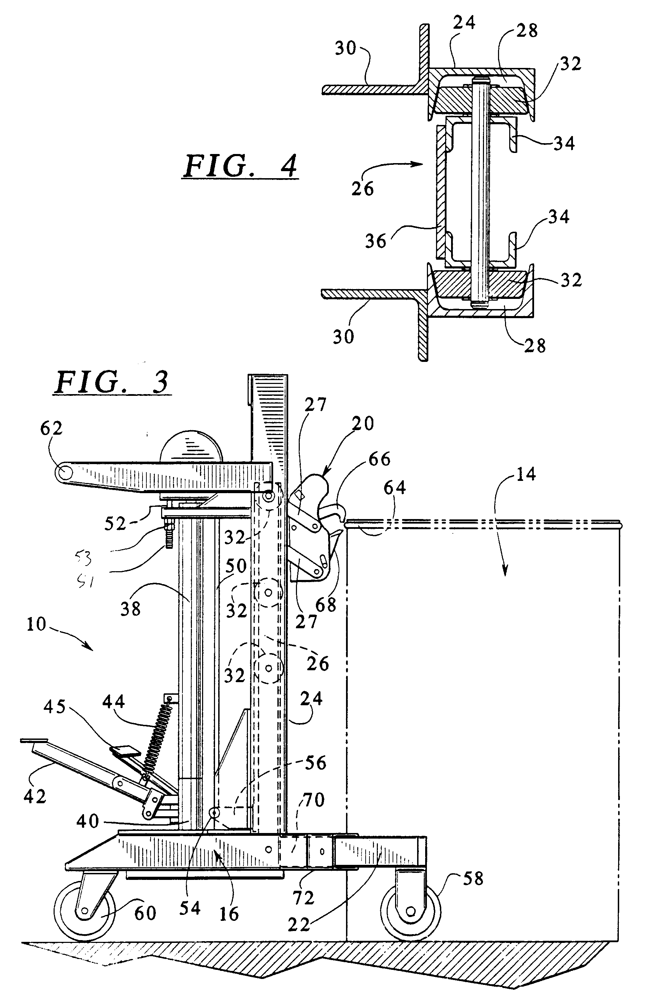

In accordance with the invention described with reference to the accompanying figures wherein like numerals designate like parts, a drum lifting and transporting device 10 is provided as illustrated in Figure 1. The device 10 is configured to be rollably positionable at a corner of a standard square pallet 12 to lift or lower a drum 14 (indicated in phantom lines in Figures 2 and 3).

As illustrated in Figures 1-3, the device 10 includes a frame 16 and a drum clamp 18. Referring to Figure 1, the frame 16 has a stable base 20 which includes a pair of elongated front legs 22 which are angled generally frontwardly and outwardly to provide stability when supporting the weight of a drum 14. The legs 22 are separated by an angle of approximately 90°.

Since the front legs 22 are preferably separated by a right angle, the device 10 can be positioned adjacent an elevated structure such as a pallet 12 (Figure 1) so that the clamp 18 can grip a drum 14 (Figures 2 and 3) resting thereon. As shown in Figure 1, a corner of the pallet 12 is received between the angled front legs 22, allowing the clamp 18 to be positioned vertically above the pallet 12.

The drum clamp 18 is preferably of the type described in U.S. Patent No. 4,741,659. The clamp 18 is secured to a vertically extendable member 26 by at least two pivoting arms 27. The drum clamp 18 is mounted to the frame 16 in a vertically moveable manner. Particularly, the frame 16 has two parallel, vertical guide tracks 24, the extendable member 26 being moveable up and down between the tracks 24.

As illustrated in Figure 4, each guide track 24 has a channel 28. The guide tracks 24 mirror each other so that the respective channels 28 face each other. Each of the tracks also has a reinforcing angle beam 30. The extendable member 26 is guided by guide rollers 32 which ride in the respective channels 28. Also shown in Figure 4, the extendable member 26 can be constructed of two facing U-beams 34 secured together by a backplate 36.

Referring to Figures 2 and 3, the extendable member 26 is operably moveable by a hydraulic cylinder 38. The hydraulic cylinder 38 is powered by a pump 40 which is driven by a foot pedal 42. A spring 44 causes the foot pedal 42 to return to an upward position during pumping. The hydraulic cylinder 38 has a rod 46 which is pressed upward by fluid pressure in the cylinder 38.

An idler sprocket 48 is rotatably mounted to an upper end of the rod 46. A chain 50 has a first end 52 secured to the frame 16. The chain 50 passes over the idler sprocket 48 and downward to where a second end 54 of the chain 50 is secured to a bracket arm 56 extending from a lower end of the extendable member 26. Thus, when the hydraulic cylinder 38 is actuated, the sprocket 48 pulls the second end 54 of the chain 50 upward. The extendable member 26 (and clamp 18 attached thereon) is thereby displaced twice the vertical distance of the cylinder-actuated rod 46. The pressure in the cylinder 38 can be released, lowering the extendable member 26 to rest in a down position.

Also shown in Figures 2 and 3, a front wheel 58 is mounted to each front leg 22, and a swivelling rear wheel 60 is mounted at a rear of the base 20. Furthermore, as shown in Figures 1-3, a handle 62 is positioned at the rear of the frame 16 approximately at hand level so that an operator can maneuver the device on the floor.

To lift a drum 14, the clamp 18 is lowered to contact a chime ring 64 on the drum 14. As described in U.S. Patent No. 4,741,659, an upper jaw 66 engages a top of the chime ring 64, and a lower jaw 68 engages a under a bottom edge of the chime ring 64. The extendable member 26 has a range of movement which allows the clamp 18 to grip the drum 14 whether resting on an elevated surface such as the pallet 12 (not shown) or on the floor (Figure 3).

When the clamp 18 is gripping the chime ring 64, an operator actuates the foot pedal 42, pumping the hydraulic cylinder 38 to raise the clamp 18, lifting the drum 14 as illustrated in Figure 2. A brace member 70 extends forwardly from the extendable member 26 to cradle and support the drum 14. The brace member 70 preferably has generally the same curvature of the drum 14. When the drum 14 is lifted, the drum 14 is rollably transportable with the device 10.

Usually, four drums 14 fit on a pallet 12, with one drum 14 generally at each pallet corner. When loading or unloading drums 14 from a pallet, the device 10 can separately maneuver each drum 14 by rolling the device 10 to the corresponding pallet corner. It is also known to provide a carousel (not shown) under a pallet 12, allowing the pallet 12 to be turned for easier access to a desired pallet corner.

Referring back to Figure 1, each of the front legs 22 is telescopable within a tubular portion 72 of the frame 16. Each tubular portion 72 has a locking hole 74 with a respective pin 76. Also, each leg 22 has a first hole 78R and a second hole 78E which correspond to the retracted and extended positions, respectively. Each leg 22 can locked in a desired position by passing the pin 76 through the hole 72 and the corresponding hole 78R or 78E.

In Figures 2 and 3, the legs 22 are illustrated in the retracted position. In the retracted position, the device 10 can lift a drum weighing approximately 600 lbs. Furthermore, the outer width dimension is approximately 36" in the retracted position, allowing the device 10 to pass through most doorways in industrial environments. In the extended leg position (not shown), the outer width dimension is approximately 41". However, the extended legs 22 hold the front wheels 58 in a more forward position, thereby increasing the lifting capacity to a drum weighing approximately 1000 lbs. without tipping the device 10.

It should be understood that various changes and modifications to the presently preferred embodiments described herein will be apparent to those skilled in the art. Such changes and modifications may be made without departing from the spirit and scope of the present invention and without diminishing its attendant advantages. The device 10 can be dimensioned to support the frame 16 at a sufficiently high elevation above the floor that the frame 16 can be positioned over the pallet 12. In such an embodiment, the legs 22 would preferably be long enough that the pallet is received between the front wheels 58 with some maneuvering space to spare. Also, the telescoping feature could be actuated by a powered means, such as with hydraulic cylinders. It is, therefore, intended that such changes and modifications be covered by the appended claims.

## Claims

1. A drum lifting and transporting device comprising:
a rollable frame, said frame including a pair of front legs extending generally forwardly and outwardly;
a drum clamp mounted to said frame in a vertically moveable manner; and
an actuator operable to move said drum clamp; relative to said frame;
wherein said device is positionable adjacent a pallet corner so that said pallet corner is received between said legs.

2. The drum lifting and transporting device according to Claim 1 wherein said legs are angled away from each other at approximately 90°.

3. The drum lifting and transporting device according to Claim 1 wherein each front leg is telescopically extendable.

4. The drum lifting and transporting device according to Claim 3 wherein each front leg is lockable by a pin in either an inner position or in an extended position.

5. The drum lifting and transporting device according to Claim 1 wherein said actuator comprises:
a fluid cylinder;
a rod movably driven by said fluid cylinder, said rod being operably connected to said drum clamp; and
a foot pedal operable to pump fluid pressure into said cylinder.

6. The drum lifting and transporting device according to Claim 4 wherein said actuator further comprises:
a chain having a first end secured to said frame and a second end secured to said drum clamp; and
an idler sprocket rotatably mounted to said rod, said chain running over a top of said sprocket so that motion of said sprocket results in vertical motion of said drum clamp.

7. The drum lifting and transporting device according to Claim 1 wherein the drum clamp comprises:
a pivotal upper jaw engageable over a top of a drum chime ring; and
a pivotal lower jaw engageable with a bottom edge of the drum chime ring, wherein said upper and lower jaws coact to grip said chime ring to lift said drum.

8. The drum lifting and transporting device according to Claim 1 wherein said drum clamp includes a lower brace member contactable against a side of said drum.

9. The drum lifting and transporting device according to Claim 1 wherein said frame includes:
two parallel, vertically disposed tracks, each said track having a channel, said channels facing each other, and
at least one guide roller on said drum clamp to ride in each said channel.

10. The drum lifting and transporting device according to Claim 1 further comprising:
a handle disposed on a rearward side of said frame, said handle being grippable by an operator to roll said device on the ground.

11. A drum lifting and transporting device comprising:
a frame;
a drum clamp vertically slidable on said frame;
an actuator operable to move said drum clamp relative to said frame; and
a foot pedal operable to drive said actuator.

12. The drum lifting and transporting device according to Claim 11 further comprising:
two front legs generally forwardly extending from said frame, said front legs each having a wheel mounted thereon, said front legs being angled outwardly from each other so that said device is positionable to receive a pallet corner generally between said front legs so that said clamp is positionable relative to the palate for lifting or lowering a drum on said pallet.

13. The drum lifting and conveying apparatus according to Claim 11 wherein the actuator comprises:
a hydraulic cylinder;
a hydraulic pump providing pressurized fluid to said hydraulic cylinder; and
a foot pedal which drives said hydraulic pump.

14. The drum lifting and transporting device according to Claim 13 wherein said actuator further comprises:
a linearly driven rod linearly driven by said hydraulic cylinder;
a chain having a first end secured to said frame and a second end secured to said drum clamp; and
an idler sprocket rotatably mounted to said rod, said chain running over a top of said sprocket so that linear motion of said rod results in vertical linear motion of said drum clamp.

15. The drum lifting and transporting device according to Claim 11 further comprising:
a handle mounted on said frame for hand-operated positioning of said device.

16. A drum lifting and conveying apparatus comprising:
a frame which stands in an upright position on a floor, the frame being configured to roll on said floor in said upright position;
two front legs generally forwardly and outwardly extending from said frame;
a pair of front wheels, each said front wheel being mounted to an end of one of said legs;
a drum clamp movably mounted on said frame; and
a foot-powered actuator operable to lift said drum clamp;
said front legs being angled away from each other so that said frame is positionable to receive a pallet corner between said front wheels so that said drum clamp can lift or lower a drum from said pallet while said frame remains in said upright position.

17. The drum lifting and conveying apparatus according to Claim 15 wherein said front legs are extendable in length.

18. The drum lifting and conveying apparatus according to Claim 15 wherein the foot-powered actuator comprises:
a hydraulic cylinder;
a hydraulic pump providing pressurized fluid to said hydraulic cylinder; and
a foot pedal which drives said hydraulic pump.

19. The drum lifting and conveying apparatus according to Claim 15 wherein said drum clamp comprises:
a pivotal upper jaw engageable over a top of a drum chime ring; and
a pivotal lower jaw engageable with a bottom edge of the drum chime ring, wherein said upper and lower jaws coact to grip said chime ring to lift said drum.

20. The drum lifting and transporting device according to Claim 15 wherein said drum clamp includes a lower brace member contactable against a side of said drum.

21. The drum lifting and transporting device according to Claim 15 further comprising:
a handle mounted on said frame so that said device is manually positionable.
